(19) Europäisches Patentamt
European Patent Office
Office européen des brevets

(11) **EP 1 339 787 B1**

(12) **FASCICULE DE BREVET EUROPEEN**

(45) Date de publication et mention
de la délivrance du brevet:
**13.05.2009 Bulletin 2009/20**

(21) Numéro de dépôt: **01989466.6**

(22) Date de dépôt: **08.11.2001**

(51) Int Cl.:
***C08L 23/12*** *(2006.01)*

(86) Numéro de dépôt international:
**PCT/EP2001/013134**

(87) Numéro de publication internationale:
**WO 2002/038670 (16.05.2002 Gazette 2002/20)**

(54) **TUBES OBTENUS A PARTIR DE COMPOSITION A BASE DE POLYMERE DU PROPYLENE**

ROHRE AUS EINER PROPYLENPOLYMERZUSAMMENSETZUNG

TUBES OBTAINED FROM A PROPYLENE POLYMER COMPOSITION

(84) Etats contractants désignés:
**AT BE CH CY DE DK ES FI FR GB GR IE IT LI LU MC NL PT SE TR**

(30) Priorité: **10.11.2000 FR 0014519**

(43) Date de publication de la demande:
**03.09.2003 Bulletin 2003/36**

(73) Titulaire: **INEOS Manufacturing Belgium NV 2040 Antwerpen (BE)**

(72) Inventeurs:
• **DELAITE, Emmanuel**
**B-7090 Braine-Le-Comte (BE)**
• **CUYPERS, Hervé**
**B-1341 Ceroux-Mousty (BE)**

(74) Mandataire: **Smith, Julian Philip Howard et al Compass Patents LLP**
**120 Bridge Road**
**Chertsey**
**Surrey KT16 8LA (GB)**

(56) Documents cités:
**EP-A- 0 316 692      WO-A-99/35430**

**EP 1 339 787 B1**

**Description**

La présente invention concerne des tubes obtenus à partir d'une composition à base de polymère du propylène. Elle concerne plus particulièrement des tubes destinés au transport de fluides à basse pression tels que les tubes de décharge domestique ou de drainage, obtenus à partir d'une composition comprenant un homopolymère du propylène et un copolymère statistique de ce dernier.

Il est connu d'utiliser le polypropylène pour produire des tubes destinés au transport des eaux usées. C'est ainsi que le document WO 99/35430 décrit l'utilisation d'une composition contenant de 80 à 98 parties en poids d'un homopolymère du propylène ayant un indice d'isotacticité d'au moins 95 % et de 2 à 20 parties en poids d'un copolymère du propylène contenant de 50 à 70 parties en poids de propylène et de 50 à 30 parties en poids d'éthylène pour la fabrication de tubes destinés aux égouts. Selon ce document, il est essentiel que le rapport de la viscosité intrinsèque du copolymère à celle de l'homopolymère soit compris entre 0,9 et 1,5 et que la composition ait un indice de fluidité en fondu compris entre 0,15 et 0,8 g/10 minutes, typiquement inférieur ou égal à 0,2 g/10 minutes.

Toutefois, les compositions ainsi obtenues n'ont pas une résistance aux chocs optimale. En outre, l'obtention d'indices de fluidité en fondu aussi faibles que 0,2 g/10 minutes entraîne des surcoûts de production qui rendent ces compositions économiquement moins rentables.

La présente invention a pour but de procurer des tubes obtenus à partir d'une composition à base de polymère du propylène qui ne présente pas de tels inconvénients.

A cet effet, la présente invention concerne des tubes obtenus à partir d'une composition à base de polymère du propylène ayant un module d'élasticité en flexion de 1400 à 2000 MPa et un indice de fluidité en fondu de 0,1 à 1 g/10 minutes comprenant :

- de 80 à 97 parties en poids d'un homopolymère du propylène (A) ayant un indice d'isotacticité d'au moins 0,96, et
- de 20 à 3 parties en poids d'un copolymère statistique du propylène (B) contenant de 45 à 70 % molaire d'éthylène et/ou d'une α-oléfine contenant de 4 à 8 atomes de carbone,

le rapport de la viscosité intrinsèque du polymère (B) au polymère (A) étant d'au moins 1,55.

Il va de soi, au sens de la présente invention, que les quantités respectives des polymères (A) et (B) mises en oeuvre sont telles que leur somme est égale à 100 parties en poids.

Le module en flexion de la composition (Flex Mod) est mesuré à 23°C sur une éprouvette injectée, d'une épaisseur de 4 mm suivant la norme ISO 178 et exprimé en MPa. L'indice de fluidité en fondu, appelé ci-après plus simplement MFI, est mesuré sous une charge de 2,16 kg à 230°C selon la norme ASTM 1238 (1986) et exprimé en g/10 minutes.

La composition utilisable pour fabriquer les tubes selon la présente invention a avantageusement un Flex Mod d'au moins 1500 MPa. Des Flex Mod d'au plus 1900 MPa confèrent aux tubes obtenus avec ces compositions une résistance aux chocs optimale. On préfère également que le MFI des compositions utilisables selon l'invention soit d'au moins 0,3 g/10 min. Des MFI d'au plus 0,6 étant tout particulièrement préférés.

Des compositions dont le MFI est de 0,3 à 0,6 g/10 min présentent l'avantage d'avoir de bonnes propriétés à moindre coût et de pouvoir être soudées à une plus grande gamme de tubes.

La quantité d'homopolymère (A) contenue dans la composition utilisable pour fabriquer les tubes selon l'invention est avantageusement d'au moins 85 parties en poids. Des teneurs en homopolymère (A) d'au plus 95 parties en poids donnent de particulièrement bons résultats.

L'homopolymère du propylène (A) mis en oeuvre dans la composition utilisable pour fabriquer les tubes selon l'invention présente un indice d'isotacticité, apprécié par la fraction molaire des triades isotactiques selon la méthode décrite en rapport avec les exemples, d'au moins 0,96 plus particulièrement d'au moins 0,97. Généralement l'indice d'isotacticité de l'homopolymère (A) ne dépasse pas 0,99.

La quantité de copolymère statistique (B) est le plus souvent d'au plus 15 parties en poids, des quantités d'au moins 5 parties en poids étant particulièrement avantageuses. D'une manière préférée le copolymère statistique (B) ne contient que des unités polymères dérivées de l'éthylène.

Des copolymères statistiques contenant de 35 à 60 % en poids d'éthylène conviennent particulièrement bien.

La teneur en comonomères mentionnée dans la présente description est déterminée par spectrométrie IR à transformée de Fourier sur le polymère transformé en un film pressé de 200 μm. Ce sont les bandes d'absorption à 732 et 720 cm⁻¹ qui sont exploitées pour la détermination de la teneur en éthylène. La bande d'absorption à 767 cm⁻¹ est exploitée pour déterminer la teneur en 1-butène.

La viscosité intrinsèque des polymères est mesurée dans la tetraline à 140°C comme décrit ci-après en rapport avec les exemples.

Une des caractéristiques essentielles des compositions utilisables pour fabriquer les tubes selon l'invention est l'utilisation de polymères (B) et (A) tels que définis ci-avant et dont le rapport des viscosités intrinsèques est d'au

2

moins 1,55. L'utilisation de tels polymères permet la préparation de tubes ayant simultanément les propriétés de rigidité requises et une bonne résistance aux chocs. La valeur maximale du rapport des viscosités des polymères (B) et (A) n'est pas critique. De préférence toutefois ce rapport est inférieur ou égal à 3, plus particulièrement inférieur ou égal à 2,5. Des valeurs comprises entre 1,6 et 2,3 donnent des résultats particulièrement avantageux.

Dans le cadre de la présente invention, on utilise le plus souvent des compositions ayant un module d'élasticité en flexion de 1500 à 1900 MPa, un indice de fluidité en fondu de 0,3 à 0,6 g/10 minutes et comprenant :

- de 85 à 95 parties en poids d'un homopolymère du propylène (A) ayant un indice d'isotacticité d'au moins 0,96, et
- de 15 à 5 parties en poids d'un copolymère statistique du propylène contenant de 35 à 55 % en poids d'éthylène,

le rapport de viscosité intrinsèque du polymère (B) au polymère (A) étant de 1,6 à 2.

De telles compositions présentent, malgré leur indice de fluidité en fondu relativement élevé, un compromis rigidité/résistance aux chocs convenant particulièrement bien à la fabrication des tubes selon l'invention.

L'homopolymère (A) et le copolymère (B) entrant dans la composition utilisable pour fabriquer les tubes selon l'invention peuvent être obtenus à l'intervention de tout système catalytique connu suffisamment productif et stéréospécifique, permettant de polymériser du propylène sous forme isotactique et pouvant incorporer les quantités requises d'éthylène et/ou d'a-oléfines. La viscosité intrinsèque de ces polymères peut être réglée par l'addition d'un ou plusieurs agents de réglage de la masse moléculaire tel que de préférence l'hydrogène. La viscosité de ces polymères est généralement ajustée de manière à satisfaire le rapport mentionné ci-avant ainsi que l'indice de fluidité final de la composition.

Les compositions utilisables pour fabriquer les tubes selon la présente invention donnant les meilleurs résultats sont obtenues en utilisant des polymères (A) et (B) obtenus à l'intervention d'un système catalytique comprenant un solide contenant à titre de composants essentiels du titane, du magnésium, du chlore et un donneur d'électrons (donneur d'électrons interne), un composé organoaluminique tel qu'un trialkylaluminium et plus particulièrement le triéthylaluminium et un donneur d'électrons externe choisi plus particulièrement parmi les alkylalkoxysilanes telles que de préférence les diéthyl- et diméthoxysilanes comprenant deux radicaux alkyle ou cycloalkyle contenant en position $\alpha$ un atome de carbone secondaire ou tertiaire. Des composés de ce type donnant de bons résultats sont le di-isobutyldiméthoxysilane et le di-cyclopentyl-diméthoxysilane.

De tels systèmes catalytiques sont bien connus de l'homme du métier. Les constituants des systèmes catalytiques préférés selon l'invention sont généralement mis en oeuvre de manière à ce que le rapport molaire entre l'aluminium du composé organoaluminique et le titane du solide catalytique soit de 3 à 300 tout particulièrement de 10 à 200. En outre, les systèmes catalytiques préférés sont tels que le rapport molaire entre l'aluminium du composé organoaluminique et le silicium du composé du silicium est de 0,5 à 10 tout particulièrement de 1 à 4.

La composition utilisable pour fabriquer les tubes selon l'invention contient avantageusement au moins 50 % en poids de polymères (A) et (B), plus particulièrement au moins 90 % en poids par rapport au poids total de la composition.

Outre les polymères (A) et (B), la composition utilisable pour fabriquer les tubes selon l'invention peut contenir divers additifs dont la teneur ne dépasse généralement pas 50 % en poids, de préférence pas 10 % en poids par rapport au poids total de la composition. La composition utilisable selon l'invention peut notamment contenir d'autres polymères, des matières de charge, des stabilisants, des pigments, des antiacides ou des agents de nucléation De préférence, la composition selon l'invention ne contient à titre de polymères que les polymères (A) et (B) définis ci-avant.

Des compositions contenant de 0,05 à 1 % en poids d'agent nucléant donnent de particulièrement bons résultats. Parmi ces agents nucléants, le benzoate de sodium est préféré pour des raisons de compromis rigidité/coût. On observe également que les compositions utilisables pour fabriquer les tubes selon l'invention qui contiennent de 0,01 à 0,5 % en poids d'antiacide et de 0,1 à 1 % en poids d'antioxydant sont avantageuses. A titre d'antioxydant, on utilise le plus souvent les phénols encombrés, les phosphites, les composés organosulfurés et/ou leurs mélanges.

De préférence les compositions utilisables pour fabriquer les tubes selon l'invention ne contiennent pas des quantités importantes de matière de charge. En effet, on observe que des quantités inférieures ou égales à 5 % en poids suffisent pour l'obtention de bonnes propriétés à des conditions économiques satisfaisantes.

La composition utilisable selon la présente invention peut être obtenue par toute technique appropriée. On peut par exemple procéder au mélange de l'homopolymère (A), du copolymère (B) et des éventuels additifs entre eux selon n'importe quel procédé connu tel que par exemple le mélange en fondu des deux polymères préformés. On préfère toutefois les procédés au cours desquels les polymères (A) et (B) sont préparés dans deux étapes de polymérisation successives. Le polymère ainsi obtenu est généralement appelé copolymère séquencé du propylène. Généralement, on procède d'abord à la préparation de l'homopolymère (A) et ensuite à la préparation du copolymère (B) en présence de l'homopolymère (A) issu de la première étape. Ces étapes peuvent être effectuées chacune, indépendamment l'une de l'autre, en suspension dans un diluant hydrocarboné inerte, dans le propylène maintenu à l'état liquide ou encore en phase gazeuse, en lit agité ou de préférence en lit fluide.

De préférence, le mélange des polymères (A) et (B) est obtenu en deux étapes de polymérisation successives en phase gazeuse dans un réacteur à lit fluide au moyen du système catalytique préféré décrit ci-avant.

Dans ce cas particulier également, les éventuels additifs sont le plus souvent introduits lors d'une étape postérieure de mélange en fondu des additifs et des polymères.

La composition utilisable pour fabriquer les tubes selon l'invention peut être mise en oeuvre selon tout procédé connu pour la fabrication d'objets façonnés. Elle convient particulièrement bien pour la fabrication de tubes et plus particulièrement pour la fabrication par extrusion de tubes destinés au transport de fluide à basse pression. Outre une rigidité améliorée, les tubes fabriqués au moyen de la composition présentent une bonne résistance aux chocs.

Les exemples qui suivent sont destinés à illustrer l'invention. Les méthodes de mesure des grandeurs mentionnées dans les exemples, les unités exprimant ces grandeurs et la signification des symboles utilisés dans ces exemples sont explicitées ci-dessous.

La viscosité des polymères est mesurée dans la tetraline à 140°C au moyen d'un viscosimètre Ostwald sur des solutions à 1,5 g/l de polymère.

Les fractions de polymère solubles dans le xylène (XS) sont déterminées par mise en solution de 3 g de polymère dans 200 ml de métaxylène à température d'ébullition, refroidissement de la solution à 25°C par immersion dans un bain d'eau et filtration de la fraction soluble à 25°C sur papier filtre correspondant à un G2 normalisé.

| | |
|---|---|
| MFI : | indice de fluidité de la composition mesuré sous une charge de 2,16 kg à 230°C selon la norme ASTM 1238 (1986) |
| C2 total : | teneur totale en éthylène exprimée en % en poids par rapport au poids du polymère (A) et du polymère (B) mesurée sur un échantillon du polymère séquencé transformé en un film pressé de 200 $\mu$m par spectrométrie Infra Rouge à partir des bandes de 732 et 720 cm$^{-1}$ |
| [A] : | quantité de polymère (A) présente dans la composition par rapport au poids total du polymère (A) et du polymère (B), exprimée en % et estimée à partir de la relation : [A] = 100 - [B] |
| [B] : | quantité de polymère (B) présente dans la composition par rapport au poids total du polymère (A) et du polymère (B), exprimée en % et estimée à partir des fractions solubles des polymères [A] et [B] et de leur mélange |
| C2 (B) : | teneur en éthylène du copolymère (B) exprimé en % en poids par rapport au poids total du polymère (B) et déterminée en appliquant la relation suivante $C_2(B) = C_2$ total x 100/[B]. |
| II : | indice d'isotacticité du polymère (A) caractérisé par la fraction molaire de triades isotactiques (enchaînement séquencé de trois unités monomères de propylène en configuration méso). Cette valeur est déterminée sur un échantillon du polymère (A) par résonance magnétique nucléaire en 13C comme décrit dans Macromolecules, volume 6, n° 6, p.925-926 (1973) et dans les références (3) à (9) de cette publication |
| $\beta/\alpha$ : | rapport de la viscosité intrinsèque du polymère (B) au polymère (A) déterminée à partir de la relation : |

$$\frac{\beta}{\alpha} = (\frac{\eta}{\alpha} - [\frac{A}{100}])/[\frac{B}{100}]$$

| | |
|---|---|
| | dans laquelle $\eta$ représente la viscosité du mélange des polymères (A) et (B) |
| Flex. Mod. : | Module en flexion de la composition mesuré comme décrit ci- avant dans la description |
| Charpy : | Résistance aux chocs mesurée selon la norme ISO 179/1$_e$A |

<u>Exemples 1 (selon l'invention) et 2R (donné à titre de comparaison)</u>

Des copolymères séquencés contenant un homopolymère du propylène (polymère (A)) et un copolymère statistique (polymère (B)) ont été préparés par polymérisation en phase gazeuse dans un lit fluide en deux étapes successives en présence d'un catalyseur à base de chlorure de magnesium contenant 2,6 % en poids de titane et 11 % en poids de di-isobutyl-phtalate (donneur d'électrons interne), du triéthylaluminium et du di-cyclopentyl-diméthoxysilane dans des quantités respectives telles que le rapport molaire Al/Ti = 75 et Al/Si = 2. Un échantillon du polymère (A) est prélevé pour analyse à la fin de la première étape.

Les conditions de polymérisation ainsi que les propriétés des polymères séquencés sont reprises dans le Tableau 1 ci-après.

100 parties en poids de ces polymères séquencés sont ensuite mises en oeuvre dans une extrudeuse ZSK 40 (commercialisée par la société Wemer&Pfeider) à une température de 230°C en présence de :

0,2 partie en poids de pentaérythrityl tétrakis(3,5-ditert-butyl-4-hydroxyphényl propionate) commercialisé sous la dénomination IRGANOX® 1010 par la firme CIBA-GEIGY,

0,1 partie en poids de tris(2,4-ditert-butylphényl) phosphite commercialisé sous la dénomination IRGAFOS®
0,2 partie en poids de DSTDP (distéarylthiodipropionate) commercialisé sous la dénomination HOSTANOX®,
0,05 partie en poids d'hydrotalcite DHT-A4, et
0,2 partie en poids de benzoate de sodium.

Le MFI, le Flex Mod ainsi que d'autres propriétés des compositions ainsi obtenues sont également repris dans le Tableau I ci-après.

On observe ainsi que la composition utilisable selon l'invention présente un compromis rigidité/résistance aux chocs légèrement meilleur malgré un MFI plus élevé.

Ces compositions ont ensuite été mises en oeuvre pour la fabrication de tubes par extrusion des granules sur une extrudeuse de type monovis (type Battenfeld) à 210°C.

Tableau I

| Caractéristiques | Exemple 1 | Exemple 2R |
|---|---|---|
| **Polymérisation - polymère (A)** | | |
| Pression (bar) | 32 | 32 |
| Température (°C) | 65 | 65 |
| Temps de séjour (h) | 2 | 2 |
| Rapport molaire H2/propylène dans le gaz (mol/mol) | 0,0017 | 0,001 |
| **Polymérisation - polymère (B)** | | |
| Pression (bar) | 20 | 20 |
| Température (°C) | 72 | 72 |
| Temps de séjour (h) | 1,53 | 1,59 |
| Rapport molaire H2/propylène dans gaz (mol/mol) | 0,0214 | 0,0189 |
| Rapport molaire éthylène/propylène dans gaz (mol/mol) | 0,79 | 0,82 |
| **C2 total (% en poids)** | 4,0 | 4,6 |
| [A] (%) | 91,7 | 91,1 |
| II | 0,98 | 0,98 |
| [B] (%) | 8,3 | 8,9 |
| C2 (B) (% en poids) | 48,2 | 51,7 |
| $\beta/\alpha$ | 1,8 | 1,3 |
| MFI (g/10 min) | 0,51 | 0,30 |
| Charpy à 23°C (kJ/m$^2$) | 80,4 | 77,6 |
| Charpy à -20°C (kJ/m$^2$) | 4,1 | 4,0 |
| Flex. Mod. (MPa) | 1741 | 1679 |
| XS (A) (%) | 1,6 | 1,6 |
| XS composition (%) | 8,7 | 9,2 |
| XS (B) (%) | 85 | 85 |

**Revendications**

1. Tubes façonnés à partir d'une composition à base de polymère du propylène ayant un module d'élasticité en flexion à 23°C suivant ISO 178 de 1400 à 2000 MPa et un indice de fluidité en fondu selon ASTM 1238 (1986) sous une charge de 2,16 kg à 230°C de 0,1 à 1 g/10 minutes comprenant :

- de 80 à 97 parties en poids d'un homopolymère du propylène (A) ayant un indice d'isotacticité d'au moins 0,96 (fraction molaire de triades isotactiques déterminée par résonance magnétique nucléaire en $^{13}$C) , et
- de 20 à 3 parties en poids d'un copolymère statistique du propylène (B) contenant de 45 à 70 % molaire d'éthylène et/ou d'une $\alpha$-oléfine contenant de 4 à 8 atomes de carbone,

le rapport de la viscosité intrinsèque (mesurée dans la tetraline à 140°C au moyen d'un viscosimètre Ostwald sur des solutions à 1,5 g/l de polymère) du polymère (B) au polymère (A) étant d'au moins 1,55.

2. Tubes façonnés à partir d'une composition selon la revendication 1, ayant un module d'élasticité en flexion de 1500 à 1900 MPa, un indice de fluidité en fondu de 0,3 à 0,6 g/10 minutes et comprenant :

- de 85 à 95 parties en poids d'un homopolymère du propylène (A) ayant un indice d'isotacticité d'au moins 0,96, et
- de 15 à 5 parties en poids d'un copolymère statistique du propylène contenant de 35 à 55 % en poids d'éthylène,

le rapport de viscosité intrinsèque du polymère (B) au polymère (A) étant de 1,6 à2.

3. Utilisation selon la revendication 1 ou 2 pour le transport des fluides basse pression.

**Claims**

1. Tubes fabricated from a composition based on propylene polymer having a modulus in flexure at 23 °C to ISO 178 of 1400 to 2000 MPa and a melt flow index to ASTM 1238 (1986) under a load of 2.16 kg at 230 °C of 0.1 to 1 g/ 10 minutes, comprising:

- from 80 to 97 parts by weight of a propylene homopolymer (A) having an isotacticity index of at least 0.96 (molar fraction of isotactic triads, determined by $^{13}$C nuclear magnetic resonance) and
- from 20 to 3 parts by weight of a statistical propylene copolymer (B) containing from 45 to 70 molar % of ethylene and/or of an $\alpha$-olefin containing from 4 to 8 carbon atoms,

the ratio of the intrinsic viscosity (measured in tetralin at 140 °C by means of an Ostwald viscosimeter on 1.5 g/l polymer solutions) of polymer (B) to polymer (A) being at least 1.55.

2. Tubes fabricated from a composition according to claim 1, having a modulus in flexure of 1500 to 1900 MPa, a melt flow index of 0.3 to 0.6 g/10 minutes, and comprising:

- from 85 to 95 parts by weight of a propylene homopolymer (A) having an isotacticity index of at least 0.96 and
- from 15 to 5 parts by weight of a statistical propylene copolymer (B)[1] containing from 35 to 55 wt % of ethylene,

the ratio of the intrinsic viscosity of polymer (B) to polymer (A) being from 1.6 to 2.

3. Use of the tubes according to claim 1 or 2 for the transport of low pressure fluids.

**Patentansprüche**

1. Rohre aus einer Propylenpolymerzusammensetzung mit einem Biegeelastizitätsmodul bei 23°C gemäß ISO 178 von 1400 bis 2000 MPa und einem Schmelzflußindex gemäß ASTM 1238 (1986) unter Belastung von 2,16 kg bei 230 °C von 0,1 bis 1 g/10 min, enthaltend:

- 80 bis 97 Gewichtsteile Propylenhomopolymer (A) mit einem Isotaktizitätsindex von mindestens 0,96 (Molfraktion isotaktischer Triaden, bestimmt durch Nuklearmagnetresonanz in $^{13}$C), und
- 20 bis 3 Gewichtsteile eines statistischen Propylencopolymers (B), enthaltend 45 bis 70% Mol.-% Ethylen und/oder ein $\alpha$-Olefin mit 4 bis 8 Kohlenstoffatomen,

wobei das intrinsische Viskositätsverhältnis (gemessen in Tetralin bei 140°C mittels eines Ostwald Viskosimeters auf Lösungen von 1,5 g/l Polymer) von Polymer (B) zu Polymer (A) mindestens 1,55 ist.

2. Rohre aus einer Zusammensetzung gemäß Anspruch 1 mit einem Biegeelastizitätsmodul von 1500 bis 1900 MPa, einem Schmelzflußindex von 0,3 bis 0,6 g/10 min, enthaltend:

   - 85 bis 95 Gewichtsteile Propylenhomopolymer (A) mit einem Isotaktizitätsindex von mindestens 0,96, und
   - 15 bis 5 Gewichtsteile eines statistischen Propylencopolymers, enthaltend 35 bis 55 Gew.-% Ethylen,

   wobei das intrinsische Viskositätsverhältnis von Polymer (B) zu Polymer (A) bei 1,6 bis 2 liegt.

3. Verwendung der Rohre gemäß Anspruch 1 oder 2 zum Transport von Niederdruckflüssigkeiten.

## RÉFÉRENCES CITÉES DANS LA DESCRIPTION

**Documents brevets cités dans la description**

- WO 9935430 A

**Littérature non-brevet citée dans la description**

- *Macromolecules,* 1973, vol. 6 (6), 925-926